# EUROPEAN PATENT APPLICATION

(11) **EP 4 300 036 A1**
(43) Date of publication of application: **03.01.2024**
(21) Application number: 22182328.9
(22) Date of filing: 30.06.2022
(51) Int. Cl.: G01B 17/02, G01N 29/22, G01N 29/24

(54) **AN ULTRASOUND MEASUREMENT DEVICE FOR INDUSTRIAL MEASUREMENT APPARATUS**

(71) Applicant: Renishaw PLC, Wotton-under-Edge, Gloucestershire GL12 8JR (GB)
(72) Inventor: The designation of the inventor has not yet been filed
(74) Representative: Dunn, Paul Edward

(57) **Abstract**

An ultrasound measurement device for an industrial measurement apparatus is described. The device includes a base (20) comprising an ultrasound transducer driver (29) and an elongate stem (22) comprising an ultrasound transducer (33). A connector assembly releasably attaches the elongate stem (22) to the base (20). The connector assembly has a first connector portion (28) provided on the base (20) and a second connector portion (36) provided at a proximal end of the elongate stem (22). The first and second connector portions (28,36), when connected, provide mechanical alignment of the elongate stem (22) relative to the base (20) and an electrical connection between the ultrasound transducer (33) and the ultrasound transducer driver (29). In this manner, a compact arrangement can be provided in which the elongate stem (22) can be easily attached and detached from the base (20).

## Description

The present invention relates to an ultrasound measurement device for an industrial measurement apparatus, such as a machine tool, and particularly to such an ultrasound measurement device having a base to which an elongate stem comprising an ultrasound transducer can be attached.

It is known to use ultrasound devices to measure industrially manufactured parts, such as turbine blades, engine components etc. Such ultrasound measurements may be used, for example, to measure the thickness of such parts or to identify flaws within those parts. Ultrasound devices are commonly hand-held and allow manual ultrasound inspection by a trained operator, but automated industrial ultrasound inspection systems are also known. For example, ultrasound measurement devices are known that can be mounted to industrial measurement apparatus, such as a computer numerically controlled (CNC) machine tool or a coordinate measuring machine (CMM). Such apparatus allows the automated inspection of parts before, during or after a machining process.

WO2016/051147 describes an ultrasound measurement device attached to a CMM by a two-axis rotary head which allows fine adjustment of the angle of the ultrasound probe relative to the surface of the object. The ultrasound device of WO2016/051147 is modular and comprises a base portion housing a transducer to which a passive coupling module, which may comprise a self-lubricating hydrophilic elastomer sphere contained in a shell, can be attached and detached in an automated manner.

Ultrasound devices that can be mounted to the spindle of a machine tool to allow in-process ultrasound measurements are described in WO2021/038106. A corresponding ultrasound measurement device is also sold under the product name RWP20.50-G-UTP by the Hexagon AB group, Stockholm, Sweden. In the first embodiment described with reference to figures 1 and 2 of WO2021/038106 there is described a measuring instrument (labelled by the reference numerals 9 and 22 in figures 1 and 2 of WO2021/038106 respectively) that is attachable to the tool holder of a machine tool. The measuring instrument is linked to a transmitting and receiving unit 11 outside the machine tool enclosure by a wireless (radio or optical) signal line 18. An ultrasound measuring unit (labelled 23) is attached to the measuring instrument by a screw-thread connection and an electrical link is provided between the measuring instrument and the ultrasound measuring unit.

The present inventors have recognised that the arrangement described in WO2021/038106 has various disadvantages. For example, the provision of two housing portions (i.e., the separate housing portions that form the measuring instrument and the ultrasound measuring unit respective) makes the whole arrangement rather bulky thereby hindering or preventing the quick measurement of smaller objects or objects that have surfaces with restricted access (such as bores etc) and also requiring the whole ultrasound measuring unit to be replaced if a different ultrasound configuration is required.

According to a first aspect of the present invention, there is provided an ultrasound measurement device for an industrial measurement apparatus, comprising;
a base comprising an ultrasound transducer driver,
an elongate stem comprising an ultrasound transducer, and
a connector assembly for releasably attaching the elongate stem to the base, the connector assembly comprising a first connector portion provided on the base and a second connector portion provided at a proximal end of the elongate stem,
wherein the first and second connector portions, when connected, provide mechanical alignment of the elongate stem relative to the base and an electrical connection between the ultrasound transducer and the ultrasound transducer driver.

An ultrasound measurement device is thus provided that is configured for use with industrial measurement apparatus. Such industrial measurement apparatus may comprise a dedicated measuring machine (e.g., a coordinate measuring machine or robot) or a machine tool (e.g., a cutting or mill machine) that also processes (e.g., cuts or mills) the part being measured. It should be noted that industrial measurement refers to the measurement of industrially manufactured objects. For example, industrial measurement may comprise the measurement of the thickness of manufactured parts (e.g., metal parts) or the detection of flaws in such manufactured parts. For the avoidance of doubt, industrial measurement apparatus excludes medical ultrasound apparatus that is used to measure or image the human or animal body.

The ultrasound measurement device comprises a base from which extends an elongate stem. The base is also attachable to the industrial measurement apparatus. For example, the base may include a tool shank or the like that allows releasable attachment of the base to a tool holder provided on the spindle of a machine tool. The elongate stem includes an ultrasound transducer that can be used to transmit and/or receive ultrasound. For example, the ultrasound transducer may allow flaw detection or thickness measurement of industrially produced parts. The ultrasound transducer driver that is provided in the base comprises electronics that, in use, drive the ultrasound transducer (e.g., to transmit and/or receive ultrasound).

The elongate stem is releasably attachable to the base via the connector assembly. In use, the elongate stem is thus attached to the base by the connector assembly. The connector assembly is formed from two mutually engageable parts or connector portions. A first connector portion is provided on the base and a second connector portion is provided at a proximal end of the elongate stem. In other words, the base comprises the first connector portion and the elongate stem comprises the second connector portion. The connector assembly is arranged such that, when the first and second connector portions are connected to one another, the elongate stem is mechanically aligned relative to the base. For example, the longitudinal axis of the elongate stem may be aligned with a central axis of the base portion. Furthermore, the connector assembly also provides an electrical connection between the base and the elongate stem which allows an electrical connection to be provided between the ultrasound transducer and the ultrasound transducer driver. The electrical connection thus electrically connects the transducer to the transducer driver thereby allowing the transducer driver to pass signals to, and/or receive signals from, the ultrasound transducer. In other words, the connector assembly provides both a mechanical linkage and an electrical connection between the base and the elongate stem.

Unlike the arrangement described in WO2016/051147 in which the (passive) coupling module is replaceable, the device of the present invention allows removal and reattachment of the elongate stem including the ultrasound transducer. The present invention thus allows the quick and easy replacement of the elongate stem. For example, the elongate stem could be replaced with an elongate stem of a different length, an elongate stem having a different transducer type, an elongate stem with a different coupling element for acoustically coupling to the surface of an object to be inspected, or an elongate stem with a different holder for retaining such a coupling element. A stem extension member could also be located between the base and the elongate stem, as described in more detail below.

The arrangement of the present invention also offers various advantages over the ultrasound devices described in WO2021/038106. For example, the removable attachment of the elongate stem via the connector assembly allows a variety of elongate stems to be quickly and easily attached to the base portion. Importantly, although such elongate stems include a transducer, the same transducer driver of the base can be used with each such elongate stem. This reduces the cost of reconfiguring the measurement device to be used for different types of measurement (e.g., to provide different length stems or different types of ultrasound transducer) and can also provide a more compact arrangement.

Advantageously, the first connector portion comprises a first reference surface and the second connector portion comprises a second reference surface. Engagement of these first and second reference surfaces provides orientational alignment of the elongate stem relative to the base when the first and second connector portions are connected. In other words, mechanical alignment of the elongate stem and the base is defined by the interaction of the first and second reference surface. The first and second reference surfaces may be flat surfaces that, when engaged, provide the alignment of the elongate stem relative to the base. The first and second reference surfaces may be substantially rigid. In this manner, the elongate stem may be attached to the base in a known and repeatable orientation.

It should also be noted that the base may include a movable joint. The first connector may then be attached to the remainder of the base via the movable joint. For example, the base may include a housing and a movable joint via which the first connector portion is attached to the housing. The moveable joint may allow the first connector portion and hence any attached elongate stem to move (e.g., tilt or slide) relative to the housing. If such a moveable joint is provided, it may define a rest position in the absence of an applied external force. The elongate stem may then be movable away from the (pre-defined) rest position to allow it to align with the surface of an object to be measured.

The elongate stem may have any suitable shape. The elongate stem may comprise an elongate tubular member; e.g., it may be provided in the form of a tube or tubular sleeve. The elongate stem may be substantially straight. The elongate stem may be rigid or substantially inflexible. Alternatively, the elongate stem may not be straight. For example, the elongate stem may include an angled joint, kink, curved portion or dog-leg connection. At least a portion of the elongate stem may be hollow or include a hollow inner cavity. The elongate stem may have any suitable cross-sectional profile, such as a square, rectangular, or oval cross-section. Advantageously, the elongate stem has a substantially circular cross-section. The length of the elongate stem may be at least 5 times its radius. The length of the elongate stem may be at least 10 times its radius. The radius of the elongate stem may be less than the radius of the base. The radius of the elongate stem is preferably less than half the radius of the base. The elongate stem may comprise a single part or tube (i.e., it may be provided as a unitary component). Alternatively, the elongate stem may be formed from a plurality of sections (e.g., a plurality of tubular sections). These sections may be permanently attached (e.g., bonded) to one another. Alternatively, such sections may be releasably attached to one another to allow sections to be removed or replaced as necessary. The ability to disassemble the elongate tubular stem may be advantageous for maintenance or repair purposes.

An ultrasound coupling element for acoustically coupling with an object may also be provided at the distal end of the elongate stem. An ultrasound transducer assembly may then be provided that comprises the ultrasound transducer and the ultrasound coupling element. For example, the ultrasound transducer may be placed in physical and acoustic contact with a transducer-contacting (rear) face of the ultrasound coupling element. Such physical contact may be direct, or it may be indirect (e.g., via an intermediate component, such as an adhesive). The ultrasound generated by the ultrasound transducer can then be coupled into the object to be inspected via the ultrasound coupling element. The ultrasound coupling element may be formed from any suitable ultrasound conducting material. For example, the ultrasound coupling element may comprise a hard (rigid) ultrasound material (e.g. Rexolite) which would allow the ultrasound coupling element to provide the datum surface. Preferably, the ultrasound coupling element comprises a so-called dry or soft coupling material (e.g. a heat cure Silicone rubber) that allows ultrasonic coupling with an object without requiring use of an ultrasound couplant gel or the like. In other words, the ultrasound coupling element may comprises an elastic (i.e., elastically deformable) ultrasound coupling element.

The distal end of the elongate stem preferably comprises a datum surface for ultrasound measurements. If a coupling element is provided that comprises a hard ultrasound material, the datum surface may be provided by a face of the coupling element. Alternatively, for example if the coupling element comprises a dry (soft) coupling material, a rigid surface of the elongate stem may provide the reference surface. For example, the distal end of an outer tubular sleeve may provide the datum surface. The transducer may also be appropriately aligned relative to the datum surface. For example, the transducer may be movably mounted within the elongate stem so that it can be translated back and forth along the longitudinal axis of the elongate stem.

The datum surface provides a physical reference or datum that is configured to contact the object to be measured. The datum surface is conveniently pre-aligned relative to the second reference surface of the second connector portion. For example, the second reference surface may be aligned to the datum surface to within 0.5°, more preferably to within 0.25° or more preferably to within 0.1°. In this manner, the datum surface can also be aligned relative to the first reference surface of the first reference portion. For example, the connector assembly may ensure that (when the first and second connector portions are connected) the datum surface is aligned to be parallel with the first reference surface to within 0.5°, more preferably to within 0.25° or more preferably to within 0.1°. The datum surface may comprise an annular face or ring. If a moveable joint is provided as described above, the datum surface may provide a reference surface that allows the elongate stem to mechanically self-align with the surface of the object to be inspected. For example, a plane of the datum surface may be configured to lie parallel to the plane of the surface that it has been placed into contact with thereby allowing ultrasound to be coupled into an object along a certain direction (e.g., along the object's surface normal). The datum surface may comprise a single, continuous datum surface (e.g., an annular ring or a flat plate) or it may be formed from a plurality of (non-continuous) spaced-apart surface sections (e.g., a plurality of partial ring segments). In a preferred embodiment, the elongate stem may comprise a tubular sleeve and the distal end of the elongate (tubular) stem may provide the datum surface. For example, if the elongate member is tubular and has a circular cross-section, the distal annular end-face of the elongate tubular member may provide a planar datum surface.

Advantageously, the connector assembly comprises an actuatable locking mechanism to releasably lock engagement of the first and second reference surfaces. The locking mechanism may thus ensure the first and second reference surfaces stay engaged or locked together when the locking mechanism has been actuated. The locking mechanism may also be unlocked to allow the first and second reference surfaces to disengage.

The locking mechanism may be implemented in a variety of different ways. In a preferred embodiment, the actuatable locking mechanism comprises an internally threaded collar for engaging at least one externally threaded portion of the first and/or second connector portions. The collar may be rotatably attached to one of the first and second connector portions with an external thread provided on the other of the first and second connector portions that engages the internal thread of the collar. Rotation of the collar in a first direction may, through interaction with the externally threaded portion(s), bring the first and second reference surfaces into tight engagement. Rotation in the opposite direction may then be used to release the engagement of the first and second reference surfaces, thereby unlocking the connector assembly. In this manner, a robust physical connection can be established that maintains a fixed relative position of the first and second reference surfaces.

Conveniently, the connector assembly is axially symmetrical thereby enabling the elongate stem to be secured to the base in any rotational orientation about the longitudinal axis of the elongate stem. In other words, the connector assembly may allow attachment on an elongate stem in different axial orientations. In this manner, the elongate stem can be attached to the base in any rotational orientation. The locking mechanism may then lock the elongate stem in such an orientation during use. This is advantageous because it allows the rotational orientation of the elongate stem to be set by a user, prior to it being locked in place. This may allow, for example, measurements to be taken of surfaces that are inclined relative to the base using an elongate stem with a transducer and coupling element that are angled away from the longitudinal axis of the elongate stem without having to adjust the orientation of the base. In other words, the elongate stem may be aligned to allow engagement of its coupling element with the surface to be measured.

As explained above, the connector assembly also provides an electrical link between the ultrasound transducer driver in the base and the ultrasound transducer in the elongate stem. Advantageously, the connector assembly comprises an electrical connector comprising a first part and second part. Preferably, the first connector portion comprising the first part of the electrical connector and the second connector portion comprises the second part of the electrical connector. Physical connection of the first and second connector portions thus also acts to bring the first and second parts of the electrical connector into engagement with each other to provide the electrical connection between the transducer driver and the transducer.

In a preferred embodiment, the first part of the electrical connector is laterally moveable relative to the base. If the first connector portion of the base comprises a first reference surface as described above, the first part of the electrical connector is preferably laterally moveable relative to the first reference surface. The second part of the electrical connector may also or alternatively be laterally moveable relative to the elongate stem. If the second connector portion comprises a second reference surface as described above, the second part of the electrical connector is preferably laterally moveable relative to the second reference surface. In this context, lateral (side-to-side) motion of the parts of the electrical connector means that they have a component of permitted motion in a direction orthogonal to the longitudinal axis of the elongate stem.

The allowance of lateral motion means that the forces involved to establish the physical connection between the first and second connector portions may be isolated to some extent from the forces applied to the first and second parts of the electrical connector. In other words, allowing lateral motion of the first and second parts of the electrical connector allows those parts to mate to provide the electrical connection without their relative position being constrained by the physical connection between the first and second connector portions. This reduces wear and can also prevent damage to the first and second parts of the electrical connector, thereby improving the reliability and longevity of the electrical link (i.e., a good electrical contact can be maintained even if vibrations are present). Advantageously, the electrical connector is also tolerant to variations in the axial (longitudinal) position of the first and second parts of the electrical connector. This again prevents damage to the electrical connector, allows a good electrical link to be established and maintained whilst also ensuring the electrical connector does not hinder the physical connection between the first and second connector portions.

The first connector portion and the second connector portion may be configured to angularly constrain the elongate stem relative to the base (e.g., to ensure the elongate stem protrudes from the base along a defined direction) without tightly constraining their relative lateral position. For example, if first and second reference surfaces are provided as part of the first and second connector portions these may comprise flat surfaces that define the relative angular alignment of the elongate stem relative to the base whilst allowing some lateral play in the physical connection. The electrical connector may then define the relative lateral position of the first and second connector portions, with the first and second reference surfaces defining the angular alignment. The first and second connector portions, when connected, preferably firmly lock the relative positions of the elongate stem and base. This prevents any further relative motion of the first and second parts of the electrical connector after the elongate stem has been attached (e.g., locked) to the base.

The ultrasound transducer may operate as an ultrasound transmitter. The ultrasound transducer may operate as an ultrasound receiver. The ultrasound transducer may operate as both an ultrasound transmitter and receiver (i.e., it may be an ultrasound transceiver). The ultrasound transducer driver may be arranged to send electrical signals to the ultrasound transducer that cause the transducer to emit ultrasound. The ultrasound transducer driver may be arranged to receive electrical signals from the ultrasound transducer that have been generated by the ultrasound transducer from received ultrasound. The ultrasound transducer driver may be arranged to both send an electrical signal to and receive electrical signals from the ultrasound transducer. Advantageously, the electrical connector comprises a co-axial electrical connector. In other words, an insulated central signal line may be surrounded by an outer concentric shield. This allows relatively high voltage and frequency transmit signals to be applied to the ultrasound transducer without generating unwanted electromagnetic noise (e.g., to ensure compliance with EMC requirements) and low intensity received signals to be passed back to the ultrasound transducer driver (i.e., with an acceptably high signal-to-noise ratio).

The first and second parts of the electrical connector may engage by a push-fit action. There may be no significant rotation of the first and second parts of the electrical connector when they are brought into engagement. For example, there may be no need to rotate the first and second parts relative to each (e.g., relative rotation of the first and second parts may be less than half a turn). The electrical connection is thus provided by the push-fit (longitudinal or axial) motion of the first and second parts of the electrical connector. This push-fit action reduces physical wear and damage that may otherwise result from the relative rotation of the first and second parts of a connector (e.g., a co-axial connector of the type described above) whilst those first and second parts are engaged with each other.

In a preferred embodiment, engagement of the first and second parts of the electrical connector using a push-fit action is followed by actuation of a locking mechanism to mechanically lock together the first and second connector portions (e.g., to engage and lock in place first and second reference surfaces). The mechanical lock may be provided by rotating the collar of a locking mechanism to secure or lock the first and second connector portions together, as described above. Allowing lateral motion of the first and second parts of the electrical connector reduces any lateral forces on the first and second parts of the electrical connector due to actuation of the locking mechanism, thereby reducing the risk of damage to the electrical connector and ensuring the electrical connection is as noise-free as possible.

The ultrasound measurement device is configured for use in an industrial environment. For example, it may be used within the enclosure of a machine tool where high pressure jets of coolant can be present and debris is often ejected at high speed during cutting. The connector assembly thus advantageously comprises one or more seals to prevent the ingress of fluid when the first and second connector portions are connected to one another. For example, the first and second portions of the connector assembly may comprise one or more O-ring seals to provide a fluid-tight seal. The first and second connector portions may also be arranged to prevent fluid ingress into the stem and/or base when they are not connected to each other.

Advantageously, the base comprises one or more batteries. In other words, the base and the transducer of an attached elongate stem are powered by an internal battery or batteries. The base also conveniently comprises a wireless communications unit for wirelessly transmitting measurement data derived from the ultrasound transducer to a remote interface. The wireless communications unit may transmit and/or receive measurement data over an optical link. The wireless communications unit may transmit and/or receive measurement data over a radio link (e.g., a spread-spectrum link, such as a frequency hopping spread spectrum link). The use of an internal battery and a wireless communications link removes the need for a trailing wire and allows the device to be stored in a tool change carousel adjacent the machine tool enclosure and automatically exchanged with cutting tools etc as and when required. An interface unit may also be provided for communicating with the wireless communications unit of the ultrasound measurement device.

According to a second aspect of the present invention, there is provided a base for a measurement device of the first aspect of the present invention, the base comprising an ultrasound transducer driver and a first connector portion for attachment of an elongate stem to the base, the first connector portion also providing an electrical connection with an ultrasound transducer of the elongate stem. The base may have any of the features described in connection with the first aspect of the present invention.

According to a third aspect of the present invention, there is provided an elongate stem for a measurement device of the first aspect of the present invention, the elongate stem comprising an ultrasound transducer and a second connector portion provided at its proximal end for attachment to a base, the second connector portion also providing an electrical connection with the ultrasound transducer driver of the base. The elongate stem may have any of the features described in connection with the first aspect of the present invention.

The present invention also extends to a stem extension member for use with an elongate stem as described above. The stem extension member may be located between the base and the elongate stem to extend the effective length of the elongate stem (e.g., to allow access to hard to reach surfaces, such as deep bores or complex surfaces). The stem extension member may be an elongate body with a third connector portion provided at its proximal end and a fourth connector portion provided at its distal end. The third connector portion may be attachable to the first connector portion of the base and the fourth connector portion may be attachable to the second connector portion of the elongate stem. An electrical connection may be provided through the stem extension member (i.e., to allow the transducer driver of the base to be electrically connected to the transducer of the elongate stem). The third and fourth connector portions may be identical to the second and first connector portions respectively.

The present invention also extends to an ultrasound measurement kit for an industrial measurement apparatus, the kit comprising a plurality of elongate stems in accordance with the third aspect of the present invention. Each elongate stem may have a different length and/or a different ultrasound transducer configuration.

The kit may also comprise a base. The kit thus allows a different elongate stem to be attached to the base as required, thereby allowing a range of different measurement tasks to be performed using the ultrasound measurement device. The present invention also extends to a method comprising a step of attaching the elongate step to the base.

An ultrasound measurement device is thus described herein. The ultrasound measurement device may also be termed an ultrasound measurement probe. The ultrasound measurement device may be configured for use with an industrial measurement apparatus. The industrial apparatus may comprise a coordinate positioning machine, such as a CMM or machine tool. The device may comprise a base (which may also be termed a base unit). The base may comprise an ultrasound transducer driver (which may also be termed an ultrasound transducer electronic circuit or an ultrasound control module). The ultrasound transducer driver may comprise a processor for controlling an ultrasound transducer. The device may include an elongate stem. The elongate stem may also be termed a stylus. The elongate stem may comprise an ultrasound transducer. The device may also include a connector assembly (or connector for short). The connector assembly may be configured to releasably attach the elongate stem to the base. The connector assembly may comprise a first connector portion provided on the base. The connector assembly may comprise a second connector portion provided on the elongate stem. The second connector portion may be provided at a proximal end of the elongate stem. The first and second connector portions, when connected, may provide mechanical alignment of the elongate stem relative to the base. The first and second connector portions, when connected, may provide an electrical connection between the ultrasound transducer and the ultrasound transducer driver. Any one or more of these features and/or other features described in the application may be provided.

The invention will now be described, by way of example only, with reference to the accompanying drawings in which;
Figure 1 shows a machine tool carrying an ultrasound measurement device,
Figure 2a shows a view of the ultrasound measurement device,
Figures 2b and 2c show end-on views of the ultrasound measurement device from the planes labelled G-G and H-H in figure 2a,
Figure 3 shows the base and elongate stem of the ultrasound measurement device of figures 2a-2c in more detail when unattached,
Figure 4 shows the base and elongate stem of the ultrasound measurement device of figures 2a-2c in more detail when attached, and
Figures 5a to 5d illustrate the main steps when attaching the elongate stem to the base.

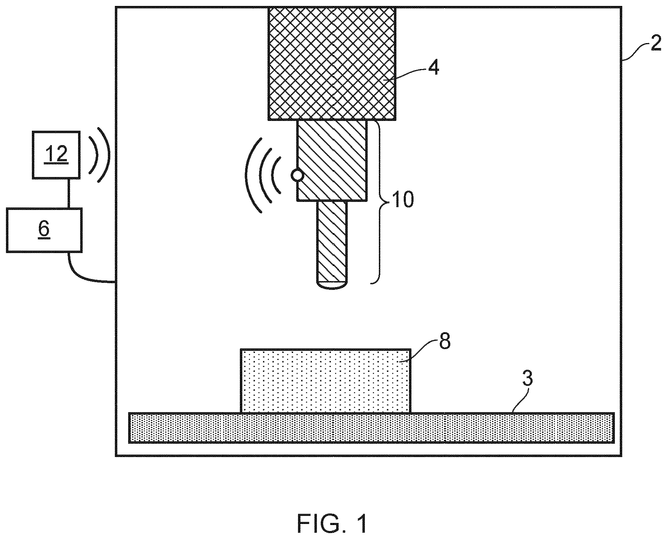

Referring to figure 1, a machine tool is illustrated. The machine tool comprises an enclosure 2 that includes a spindle 4 that is movable relative to a bed 3. The spindle 4 can be moved relative to the bed 3 under the control of a computer numerical controller (CNC) 6. In order to cut or process an object 8 placed on the machine tool bed 3, the spindle can carry a cutting tool (not shown). A measurement sensor can also be mounted to the spindle 4 in place of a cutting tool to allow the object 8 to be measured before or after a cutting procedure. Typically, such measurement sensors and tools can be automatically loaded into the spindle 4 under the control of the CNC 6 to allow a desired sequence of cutting and measurement to be implemented. In figure 1, an ultrasound measurement device 10 is shown mounted to the spindle 4. Measurement information is transmitted wirelessly (e.g., via an optical or radio link) to an interface 12 that forwards such measurements to the machine tool controller 6. As will be explained below, the ultrasound measurement device 10 allows internal properties of the object 8 to be measured, such as the thickness of the object.

Although a machine tool is illustrated in figure 1, the ultrasound measurement device of the present invention could also be configured for use with other coordinate positioning apparatus, such as coordinate measuring machines (CMMs), industrial inspection robots etc.

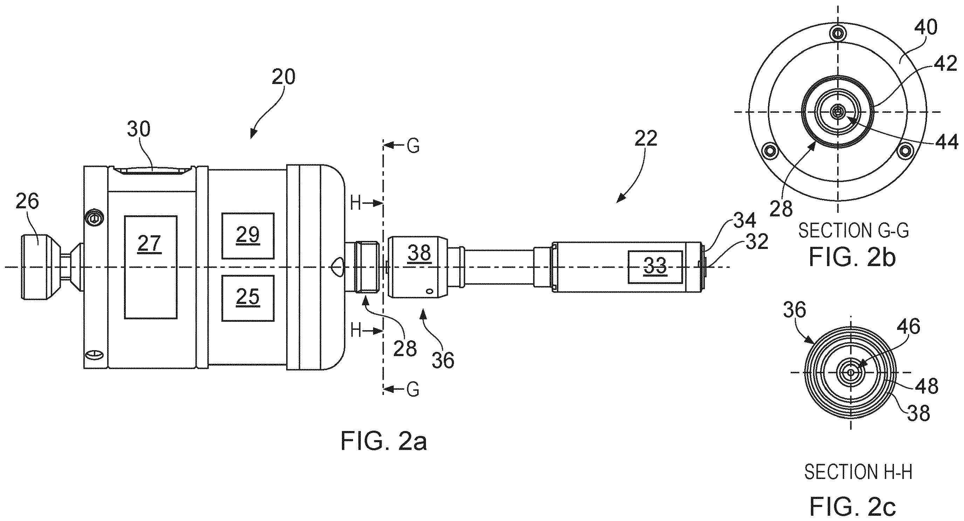

Referring to figures 2a, 2b and 2c outer views of an ultrasound measurement device of the present invention are shown. In particular, figure 2a shows the base 20 and the elongate stem 22 of an ultrasound measurement device 24 of the present invention. Figure 2b shows a view of the distal end of the base 20 from the plane G-G shown in figure 2a and figure 2c shows (at a difference scale) a view of the proximal end of the elongate stem 22 from the plane H-H shown in figure 2a.

The base 20 has a spigot 26 at its proximal end that allows it to be connected to a tool shank that can in turn be held in the spindle of a machine tool. The distal end of the base 20 comprises a first connector portion 28. The base 20 also comprises a radiofrequency (RF) transparent portion which allows the passage of an RF signal to and from a spread-spectrum (e.g., frequency hopping) RF communications module 25 located within the base 20. A transducer driver 29 is also located within the base 20, along with a set of batteries 27 that can be accessed via a battery cover 30.

The elongate stem 22 includes a protruding coupling element 32 at its distal end that is acoustically coupled to a transducer 33 located within the elongate stem 22. A datum surface 34 is also provided at the distal end of the elongate stem adjacent the coupling element 32. A second connector portion 36 is provided at the proximal end of the elongate stem 22 that comprises a rotatable collar 38.

Figure 2b show an end-on view of distal end of the base 20. The housing 40 of the base can be seen to have a circular cross-section concentrically arranged with the first connector portion 28. The first connector portion 28 comprises an outer threaded casing member 42 and a female co-axial electrical connector socket 44.

Figure 2c show an end-on view of the proximal end of the elongate stem 22 that comprises the second connector portion 36. A male co-axial electrical connector plug 46 is shown along with a member 48 that forms part of the elongate stem 22 and an internally threaded collar 38 that is rotatable relative to the remainder of the elongate stem 22.

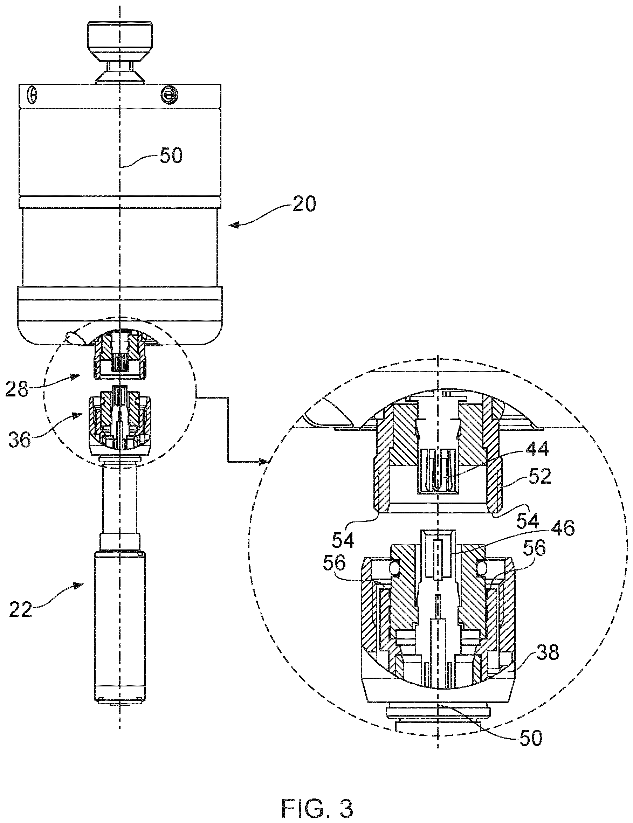

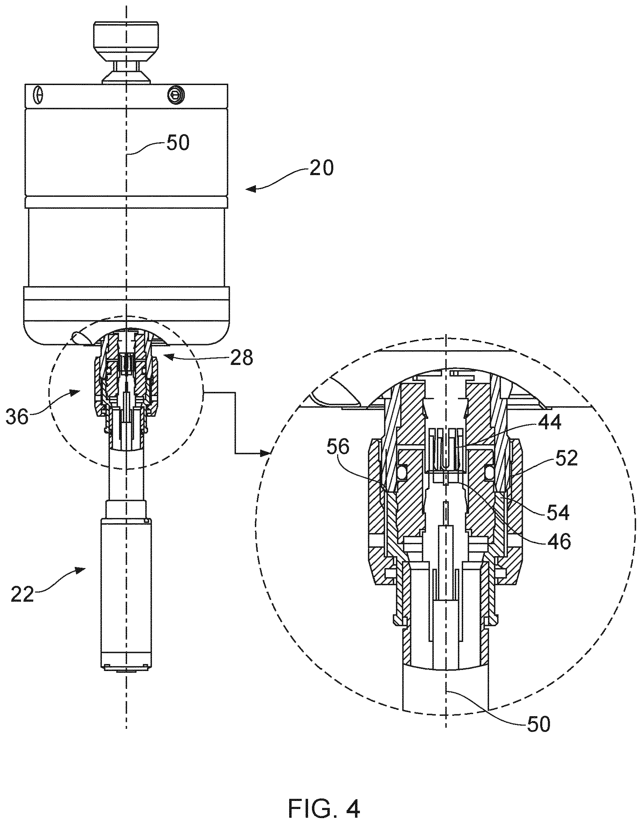

Referring to figures 3 and 4, longitudinal sections through the base 20 and the elongate stem 22 are shown. Figures 3 and 4 show the base 20 and the elongate stem 22 unattached and attached respectively, with the insets to the figures giving an expanded view of the connector assembly; the connector assembly being the combination of the first connector portion 28 and the second connector portion 36 .

The female co-axial electrical connector socket 44 of the first connector portion 28 and the male co-axial electrical connector plug 46 of the second connector portion 36 are shown located on a central (longitudinal) axis 50. The outer threaded casing 42 of the first connector portion 36 comprises a screw-threaded region 52 and is approximately coaxial with the female co-axial electrical connector socket 44. The collar 38 of the second connector portion 36 is rotatably connected to the rest of the elongate stem 22 and is dimensioned so that the screw-thread formed on the inside of the collar 38 can engage the screw-threaded region 52 of the outer threaded casing 42 of the first connector portion 36. The first connector portion 36 also includes a first reference surface 54 and the second connector portion 38 includes a second reference surface 56.

In the "attached" configuration shown in figure 4, the female co-axial electrical connector socket 44 is engaged with the male co-axial electrical connector plug 46 thereby providing an electrical connection. The first reference surface 54 and the second reference surface 56 are also physically engaged thereby defining the mechanical orientation of the elongate stem 22 relative to the base 20. The female co-axial electrical connector socket 44 and the male co-axial electrical connector plug 46 are free to move a small amount laterally relative to the remainder of the respective first and second connector portions. This prevents the relative location of the two parts of the electrical connector from being constrained by the physical alignment that is provided by the first and second reference surfaces 54 and 56.

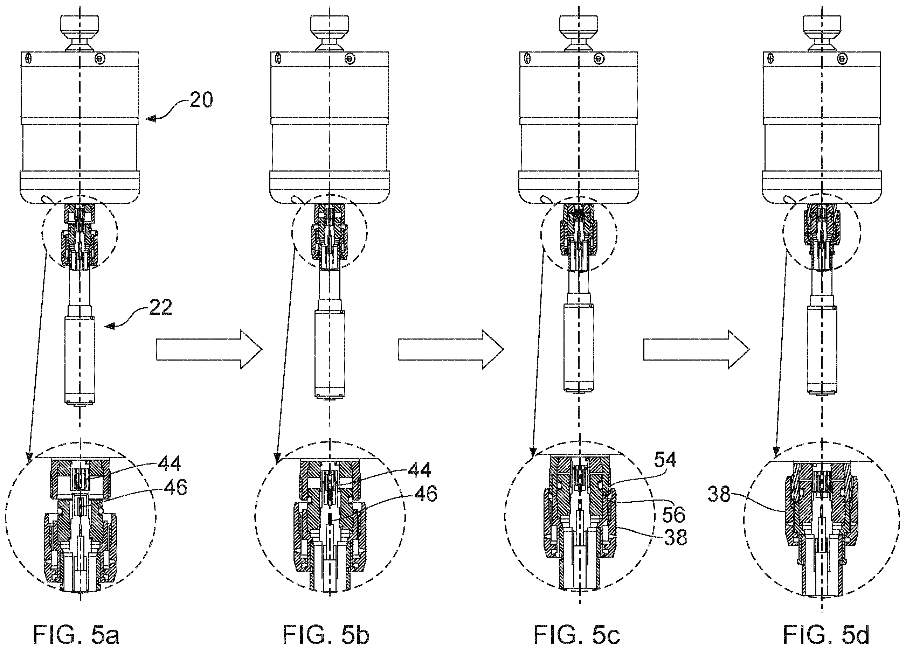

Referring next to figures 5a to 5d, the process of making a physical and electrical connection between the first and second connector portions is illustrated.

Figure 5a shows the first and second connector portions 28 and 36 aligned relative to one another prior to a physical and electrical connection being made between the elongate stem 22 and base 20.

Figure 5b shows a first stage in the attachment process. The user inserts the male co-axial electrical connector plug 46 of the second connector portion 36 into the female co-axial electrical connector socket 44 of the first connector portion 28.

Figure 5c shows how further longitudinal motion is provided until there is engagement of the first and second reference surfaces 54 and 56 of the first and second connector portions 28 and 36. At this stage, the frictional engagement of the male co-axial electrical connector plug 46 with the female co-axial electrical connector socket 44 means the elongate stem 22 is loosely held in place.

Figure 5d shows the elongate stem 22 firmly locked to the base 20 after the collar 38 has been rotated. In particular, the collar rotation causes the first and second reference surfaces 54 and 56 to engage fully and then be held in tight engagement. Importantly, the freedom for the male co-axial electrical connector plug 46 and the female co-axial electrical connector socket 44 to move laterally means that the electrical connection is established without placing any strain on the co-axial connector thereby preventing degradation of the electrical connection.

Removal of the elongate stem 22 from the base 20 is achieved by reversing the stages described above.

The skilled person would appreciate the various alternative and variants to the arrangement described above. For example, the shape and relative dimensions of the base and elongate stem could be varied and further electrical or mechanical connections could be provided.

## Claims

1. An ultrasound measurement device for an industrial measurement apparatus, comprising;
a base comprising an ultrasound transducer driver,
an elongate stem comprising an ultrasound transducer, and
a connector assembly for releasably attaching the elongate stem to the base, the connector assembly comprising a first connector portion provided on the base and a second connector portion provided at a proximal end of the elongate stem,
wherein the first and second connector portions, when connected, provide mechanical alignment of the elongate stem relative to the base and an electrical connection between the ultrasound transducer and the ultrasound transducer driver.

2. An ultrasound measurement device according to claim 1, wherein the first connector portion comprises a first reference surface and the second connector portion comprises a second reference surface, engagement of the first and second reference surfaces providing orientational alignment of the elongate stem relative to the base when the first and second connector portions are connected.

3. An ultrasound measurement device according to claim 2, wherein a distal end of the elongate stem comprises a datum surface for ultrasound measurements, the datum surface being pre-aligned relative to the second reference surface of the second connector portion.

4. An ultrasound measurement device according to any one of claims 2 to 3, wherein the connector assembly comprises an actuatable locking mechanism to releasably lock engagement of the first and second reference surfaces.

5. An ultrasound measurement device according to claim 4, wherein the actuatable locking mechanism comprises an internally threaded collar for engaging at least one externally threaded portion of the first and/or second connector portions.

6. An ultrasound measurement device according to any preceding claim, wherein the connector assembly is axially symmetrical thereby enabling the elongate stem to be secured to the base in any rotational orientation about the longitudinal axis of the elongate stem.

7. An ultrasound measurement device according to any preceding claim, wherein the connector assembly comprises an electrical connector comprising a first part and second part, the first connector portion comprising the first part of the electrical connector and the second connector portion comprising the second part of the electrical connector.

8. An ultrasound measurement device according to claim 7, wherein the first part of the electrical connector is laterally moveable relative to the base and/or the second part of the electrical connector is laterally moveable relative to elongate stem.

9. An ultrasound measurement device according to any one of claims 7 to 8, wherein the electrical connector comprises a co-axial electrical connector and the first and second parts of the electrical connector engage by a push-fit action.

10. An ultrasound measurement device according to any preceding claim, wherein the connector assembly comprises one or more seals to prevent the ingress of fluid when the first and second connector portions are connected to one another.

11. An ultrasound measurement device according to any preceding claim, wherein the base comprises one or more batteries and a wireless communications unit for wirelessly transmitting measurement data derived from the ultrasound transducer to a remote interface.

12. A base for a measurement device according to any preceding claim, the base comprising an ultrasound transducer driver and a first connector portion for attachment of an elongate stem to the base, the first connector portion also providing an electrical connection with an ultrasound transducer of the elongate stem.

13. An elongate stem for a measurement device according to any one of claims 1 to 11, the elongate stem comprising an ultrasound transducer and a second connector portion provided at its proximal end for attachment to a base, the second connector portion also providing an electrical connection with the ultrasound transducer driver of the base.

14. A stem extension member for an elongate stem according to claim 13, the stem extension member comprising an elongate body with a third connector portion provided at its proximal end and a fourth connector portion provided at its distal end, the third connector portion being attachable to the first connector portion of the base and the fourth connector portion being attachable to the second connector portion of the elongate stem.

15. An ultrasound measurement kit for an industrial measurement apparatus, the kit comprising a plurality of elongate stems according to claim 13 that each have a different length and/or a different ultrasound transducer configuration.
